# EUROPEAN PATENT APPLICATION

(11) **EP 2 754 975 A1**
(43) Date of publication of application: **16.07.2014**
(21) Application number: 13198138.3
(22) Date of filing: 18.12.2013
(51) Int. Cl.: F24F 13/24, F24F 12/00

(54) **Air exchange device for buildings**

(30) Priority: 09.01.2013 IT TO20130008
(71) Applicant: Thesan S.p.A., 10129 Torino (IT)
(72) Inventor: Balbo di Vinadio, Aimone, I-10050 Chiusa San Michele (Torino) (IT)
(74) Representative: Marchitelli, Mauro

(57) **Abstract**

Air exchange device for buildings, comprising:
- an elongated casing (12);
- a heat exchanger (30) housed inside said casing (12); and
- a first fan unit (40) and a second fan unit (42) arranged to generate respective airflows (F1, F2) in a relationship of mutual heat exchange in said heat exchanger (30), wherein the first and the second fan units (40, 42) each comprise at least one electric fan (44) having a hollow support casing (82) having an intake opening (46) and a discharge opening (48), wherein a duct for the passage of an airflow is defined within said support casing (82), which contains an electric motor that drives a rotor;
- a damping elastic support (54) of low-density polymeric material housed inside said casing (12), wherein said electric fans (44) of said fan units (40, 42) are supported in a freely floating manner within their respective seats (60) formed within said damping elastic support (54).

## Description

### Field of the invention

The present invention relates to an air exchange device for buildings, comprising a casing inside which a heat exchanger and two fan units are housed, configured to produce a first airflow directed from the internal environment towards the external environment and a second airflow directed from the external environment towards the internal environment, wherein the two airflows are in a relationship of mutual air exchange in said heat exchanger.

### Description of the prior art

The document EP-A-2354690 of the same applicant discloses an air exchange device for buildings equipped with two fans configured to produce two airflows that pass through a heat exchanger in counterflow with respect to one another.

The air exchange devices of this type tend to create excessive noise. Studies and tests conducted by the applicant have shown that the noise of the known solutions is mainly due to the vibrations generated by the fans, which are transmitted to the casing.

The document US2005/0236150 discloses an energy recovering air exchange device including a casing formed by two coupled shells made of an insulating structural polymer, such as high-density expanded polystyrene. The insulating casing contains a heat exchanger and two fans. The casing performs a function of thermal insulation to prevent condensation and frost, and a function of mechanical support of the internal components, such as motors, rotors, etc.. To perform the function of mechanical support of the internal components, the insulating casing must be made of unyielding, geometrically precise structural material, in order to correctly house the fan unit. A casing produced in this way is not able to effectively reduce the noise of the air exchange device.

### Object and summary of the invention

The present invention aims to provide an air exchange device for buildings that overcomes the noise problems of the prior art.

According to the present invention, this object is achieved by an air exchange device, which has the features forming the subject of claim 1.

The claims form an integral part of the disclosure provided in relation to the invention.

### Brief description of the drawings

The present invention will now be described in detail with reference to the attached drawings, given purely by way of non-limiting example, wherein:
- Figure 1 is an exploded perspective view of an air exchange device according to the present invention,
- Figure 2 is a perspective view illustrating the direction of airflow in the air exchange device of Figure 1,
- Figure 3 is an exploded perspective view of the part indicated by the arrow III in Figure 1, and
- Figure 4 is a partially exploded perspective view of a fan indicated by the arrow IV in Figure 3.

### Description of embodiments of the invention

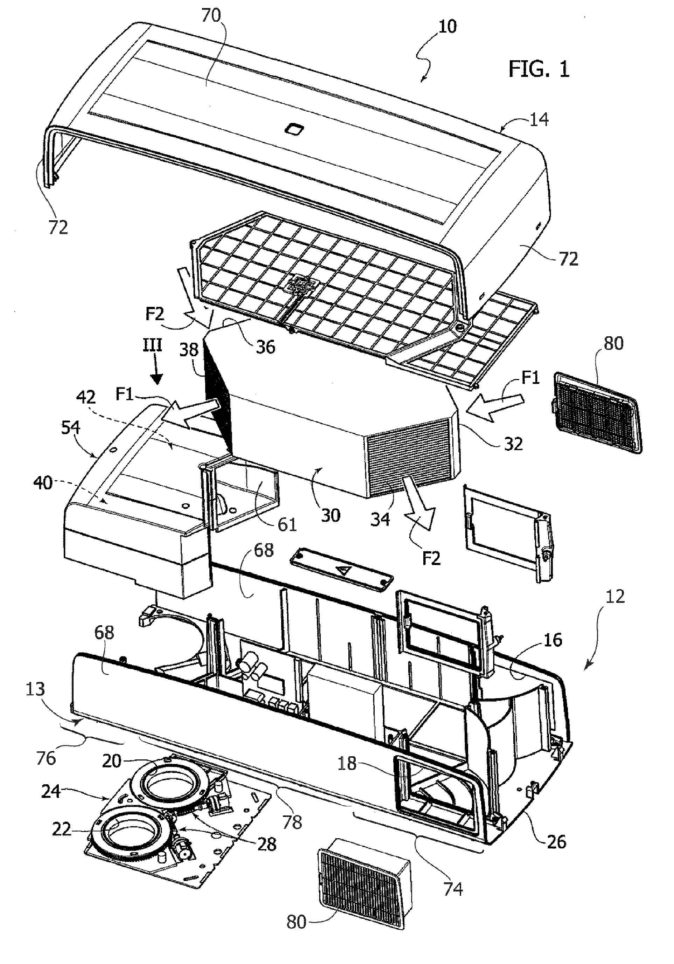

With reference to Figure 1, numeral 10 indicates an air exchange device for buildings according to the present invention. The device 10 comprises a casing 12 including a base 13 and a lid 14, preferably made of structural thermoplastic polymers that are injection-moldable, paintable and/or mass-dyeable, typically used for casings of electrical appliances.

The device 10 is intended to be mounted in an internal environment of a building to carry out air exchange with recovery of the airflow energy delivered to the outside. The device 10 is intended to be fixed on a perimetrical wall of a building and communicates with the external environment by means of a pair of holes formed in the perimetrical wall.

The base 13 of the casing 12 has a flat bottom wall 26, elongated in a longitudinal direction and two lateral walls 68 parallel to the longitudinal direction of the bottom wall 26 and orthogonal to the bottom wall 26. The base 13 is essentially U-shaped, open on its transverse sides and on the opposite side to the bottom wall 26.

The lid 14 has an essentially flat wall 70, elongated in the longitudinal direction and two transverse walls 72. The wall 70 of the lid 13 closes the open side of the base 13 opposite to the bottom wall 26. The transverse walls 72 of the lid 14 close the open transverse sides of the base 13. When the cover 14 is applied to the base 13, the casing 12 essentially forms a hollow parallelepiped shape, elongated in the longitudinal direction. The casing 12 in the longitudinal direction can be divided into a first and a second end zone 74, 76 adjacent to respective transverse sides, with a central zone 78 comprised between the said end zones 74, 76.

The casing 12 comprises an internal inlet opening 16, an internal outlet opening 18, an external inlet opening 20 and an external outlet opening 22. The internal inlet opening 16 and the internal outlet opening 18 are formed on the lateral walls 68 of the base 13 and are located in the first end zone 74 of the casing 12. At the internal inlet opening 16 and the internal outlet opening 18 respective grills 80 can be applied.

The external inlet opening 20 and the external outlet opening 22 are located in the second end zone 76 of the casing 12 and communicate with respective holes (not shown) formed in the perimetrical wall of the building. The external inlet opening 20 and the external outlet opening 22 communicate with the holes formed in the perimetrical wall. In the example illustrated, the external inlet opening 20 and the external outlet opening 22 are formed on a plate 24, preferably of metal, parallel to the bottom wall 26 of the base 13 and fixed to the base 13 of the casing 12. The plate 24 can be equipped with closing devices 28 that control the opening and closing of the openings 20, 22. The closing devices 28 can be of the type described in a contemporary patent application by the same applicant.

The casing 12 contains a cross-flow heat exchanger 30, housed in the central section 78 of the casing 12. The heat exchanger 30 has a casing in which two paths are defined for two airflows F1, F2. The two paths are in a relationship of mutual heat exchange within the heat exchanger 30. The casing of the heat exchanger 30 has a first inlet 32 and a first outlet 38 for the first airflow F1 and a second inlet 36 and a second outlet 34 for the second airflow F2. The heat exchanger 30 is preferably formed by a unit of superimposed lamellae that form a first plurality of channels directed from the first inlet 32 to the first outlet 38 and a second plurality of channels directed from the second inlet 36 towards the second outlet 34. In use, the first airflow F1 travels along the first plurality of channels and the second airflow F2 travels along the second plurality of channels. In use, the two airflows exchange thermal energy between each other.

The first inlet 32 and the second outlet 34 of the heat exchanger 30 are located in the first end zone 74 of the casing 12 and are located on two faces inclined relative to a longitudinal axis, according to a general V-shaped configuration. The second inlet 36 and the first outlet 38 of the heat exchanger 30 are located in the second end zone 76 of the casing 12 and are located on two faces inclined relative to a longitudinal axis, according to a general V-shaped configuration. The first inlet 32 is in communication with the internal inlet opening 16 and the second outlet 34 is in communication with the internal outlet opening 18.

A damping elastic support 54 is housed in the second end zone 76 of the casing 12. The damping elastic support 54 has outer walls in contact with respective inner walls of the casing 12. In particular, the elastic support is in contact with the lateral walls 68 of the base 13, with the flat wall 70 and with the transverse wall 72 of the lid 14, and with the plate 24.

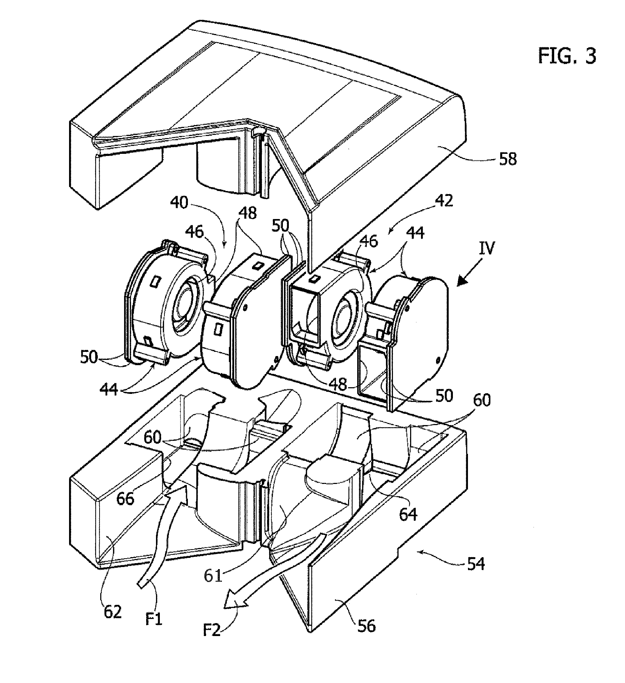

With reference to Figure 3, within the damping elastic support 54, a first and a second fan unit 40, 42 are housed. The first fan unit 40 generates the first airflow F1 and the second fan unit 42 generates the second airflow F2.

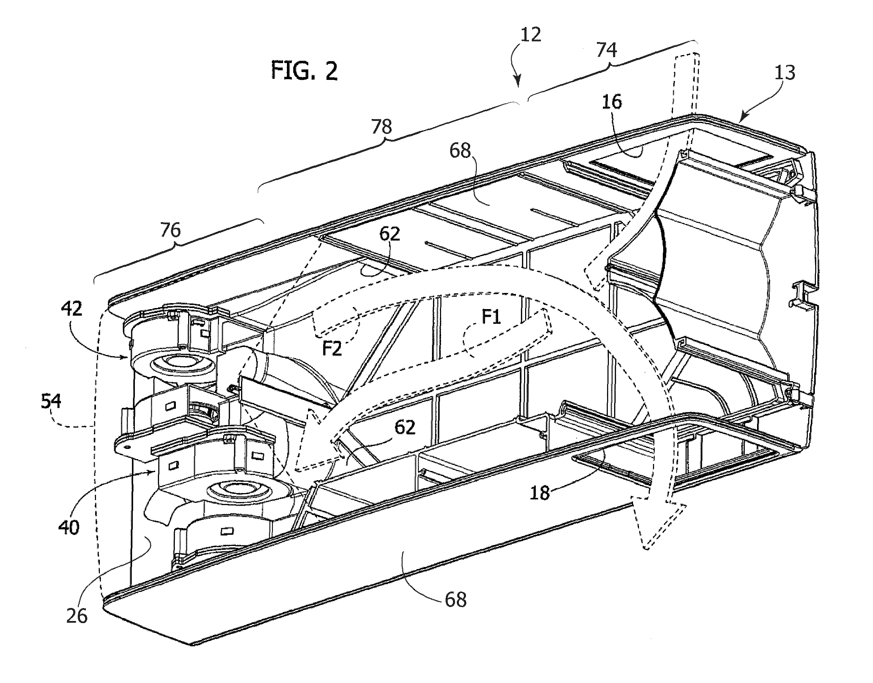

With reference to Figure 2, the first airflow F1 is directed from the internal inlet opening 16 towards the external outlet opening 22. The second airflow F2 is directed from the external inlet opening 20 toward the internal outlet opening 18. The airflows are in a relationship of mutual heat exchange in the heat exchanger 30. In winter when the temperature of the internal environment is greater than the temperature of the external environment, the outwardly directed airflow F1 transfers heat to the inwardly directed airflow F2. In summer when the internal environment is conditioned and is at a lower temperature than the external temperature the outwardly directed airflow F1 cools the inwardly directed airflow F2.

With reference to Figure 3, the damping elastic support is preferably formed by a first and a second shell 54, 56 in contact with each other along respective facing edges. The first shell 54 has a bottom wall in contact with the plate 24 in which an inlet opening 64 and an outlet opening 66, are formed, directly facing the external inlet opening 20 and the external outlet opening 22, respectively.

Within the damping elastic support 54, seats 60 are formed, which receive the respective fan units 40, 42 with shape coupling. Within the damping elastic support 54 an inlet duct 61 and an outlet duct 62 are also formed, isolated from each other and communicating, respectively, with the inlet opening 64 and with the outlet opening 66. The inlet duct 61 and the outlet duct 62 have respective open edges in direct contact with the second inlet 36 and with the first outlet 38 of the heat exchanger 30.

The damping elastic support 54 is made from non-structural flexible foam material. The materials suitable for the construction of the damping elastic support 54 are low-density polymeric materials, with low Young's modulus, and low resistance, for example, viscoelastic polyurethane foam, with a density between 0.1 and 2 Kg/m³, Young's modulus between 0.01 and 0.6 GPa and a resistance of between 0.1 and 10 MPa.

The first fan unit 40 and the second fan unit 42 each comprise at least one electric fan 44. The fan can have an axial, centrifugal, or diagonal rotor. In the illustrated example each fan unit 40, 42 comprises two electric fans 44 arranged in parallel with respect to the airflows F1, F2. Each fan 44 produces an airflow equal to half of the total airflow F1, F2 of the respective fan unit 40, 42. In the example shown the fans 44 are centrifugal fans.

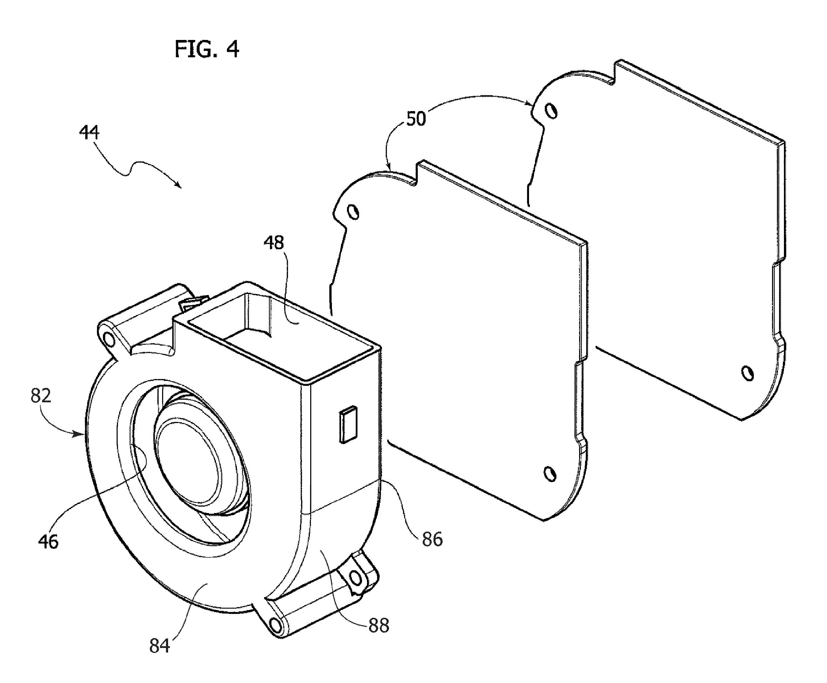

With reference to Figure 4, each fan 44 has a hollow support casing 82, typically made of rigid plastic material, within which a passage duct for an airflow is defined. Within the support casing 82, a rotor is housed, along with an electric motor that drives the rotation of the rotor. The casing 82 has an intake opening 46 and a discharge opening 48. In the example illustrated, the housing 82 of each fan 44 has a first and a second front wall 84, 86 and a circumferential wall 88. The intake opening 46 is formed in the first front wall 84 and the discharge opening 48 is formed in the circumferential wall 88. The intake opening 46 is formed in the first front wall 84 and the discharge opening 48 is formed in the circumferential wall 88.

With reference to Figures 3 and 4, each fan 44 is equipped with at least one weighting element 50. In the illustrated example, the weighting element 50 is formed from a metal plate. In the example described, two metal weighting plates 50 are envisaged for each fan 44. The weighting elements 50 are fixed, for example by means of screws, on the second front wall 86 of the casing 82, i.e. on the front wall opposite to that on which the intake opening 46 is formed. The weighting elements 50 have the function of increasing the mass of the fan 44 along the most critical axes regarding vibrations. The plate-shaped weighting elements 50 applied on the front wall 86 opposite to the intake opening 46, facilitate the obtaining of the maximum effect of weighting with a minimum increase in the dimensions of the fan. Preferably, the plate-shaped weighting elements 50 have an area essentially equal to the area of the second front wall 86.

The fact of arranging two electric motors 44 in parallel for each fan unit 40, 42 allows the use of smaller and quieter motors compared to the case wherein a single electric motor is used for each airflow F1, F2.

The fact of increasing the mass of the electric motors 44 allows considerable reduction of the vibrations generated by the motors. However, if the electric motors 44 were rigidly coupled to the casing 12, the positive result obtained with the heavier motors 44 would be essentially lost.

According to the present invention, the electric fans 44 are supported in a freely floating manner inside the elastic support 54. Preferably, each electric fan is held with shape coupling in a respective seat 60 of the elastic support 54. Each fan is free to vibrate due to the vibrational stresses coming from the rotation of the motor and the rotor. However, the vibrations of the electric fans 44 are not transmitted to the outer casing 12. The damping elastic support 54 functions as a spring/damper system against the electric fans 44. The vibrations of the electric fans 44 are absorbed and dissipated by the damping elastic support 54.

The electric fans 44 have no rigid contact with the casing 12. The damping elastic support 54 forms a vibrational insulating cushion between the electric fans and the outer casing 12 and prevents the transmission of vibrations from the electric fans to the outer casing 12.

The system of fans 44, weighted and isolated from the casing 12 by the elastic support 54 operates as a mass/ spring/damper system, where the elastic support 54 carries out both the elastic function and the damping function.

The elastic support 54 carries out the following functions:
- housing of the fans 44,
- vibrational decoupling of the fans 44 from the casing 12,
- damping/absorption of the vibrations,
- defining of connecting ducts between the heat exchanger 30 and the external inlet and outlet openings,
- thermal insulation of the airflows to prevent heat loss.

The elastic support 54 also allows the considerable simplification of the assembly of the electric motors 44, which are simply inserted into the respective seats 60 and retained by the shape coupling with the shells 56, 58 without the need for fixing components.

Of course, without prejudice to the principle of the invention, the details of construction and the embodiments may vary widely with respect to those described and illustrated without departing from the scope of the invention as defined by the claims that follow.

## Claims

1. Air exchange device for buildings, comprising:
- an elongated casing (12) subdivided in a longitudinal direction in a first end zone (74), a second end zone (76) with a central zone (78) arranged between the first and the second end zones (74, 76), the casing having an internal inlet opening (16) and an internal outlet opening (18) located in the first end zone, and an external inlet opening (20) and an external outlet opening (22) located in the second end zone (76),
- a heat exchanger (30) housed within said casing (12) and located in said central zone (78), wherein the heat exchanger (30) has a first inlet (32) in communication with the internal inlet opening (16), a first outlet (38) in communication with the external outlet opening (22), a second inlet (36) in communication with the external inlet opening (20) and a second outlet (34) in communication with the internal outlet opening (18), and
- a first fan unit (40) arranged to generate a first airflow (F1) directed from the internal inlet opening (16) towards the external outlet opening (22) and a second fan unit (42) arranged to generate a second airflow (F2) directed from the external inlet opening (20) towards the internal outlet opening (18), wherein the first and the second airflows (F1, F2) are in a relationship of mutual heat exchange in said heat exchanger (30), and wherein the first and the second fan units (40, 42) comprise respective electric fans (44), having a hollow support casing (82) having an intake opening (46) and a discharge opening (48), wherein within said support casing (82) a duct is defined for the passage of an airflow, and which also contains an electric motor and a rotor,
- a damping elastic support (54) of low-density polymeric material, housed inside said casing (12) and located in said second end zone (76) of the casing (12), wherein said electric fans (44) of said fan units (40, 42) are supported in a freely floating manner inside said damping elastic support (54), wherein an inlet duct (61) and an outlet duct (62) are formed within said damping elastic support (54) having respective openings (64, 66) facing the external inlet opening (20) and the external outlet opening (22), respectively, and wherein said inlet and outlet ducts (61, 62) have respective edges in contact with said second inlet (36) and with said first outlet (38), respectively, of said heat exchanger (30).

2. Device according to claim 1, wherein said elastic support (54) comprises two half-shells (56, 58) in contact with each other along respective edges.

3. Device according to claim 1, wherein said damping elastic support (54) comprises respective seats (60) which receive the support casings (82) of the respective fans (44) with shape coupling.

4. Device according to claim 1 or claim 3, wherein said electric fans (44) are fixed to respective weighting elements (50) configured to increase the vibrational mass of the electric fans (44).

5. Device according to claim 4, wherein said weighting elements (50) are formed from metal plates.

6. Device according to claim 5, wherein said electric fans (44) are centrifugal fans with an axial intake opening (46) and a tangential discharge opening (48) and wherein said weighting elements (50) are applied on respective flat faces (52) of the fans (44) opposite to the respective discharge openings (48).

7. Device according to any of the preceding claims, wherein each of said fan units (40, 42) comprises two electric fans (44) in parallel to each other.
